# EUROPÄISCHE PATENTSCHRIFT

(11) **EP 0 589 268 B1**
(45) Veröffentlichungstag und Bekanntmachung des Hinweises auf die Patenterteilung: **22.04.1998**
(21) Anmeldenummer: 93114216.0
(22) Anmeldetag: 04.09.1993
(51) Int. Cl.: G02B 6/26, G02B 6/12, G02B 6/34

(54) **Integriert optische Schaltung mit einer Bragg-Struktur**
Integrated optical circuit with a Bragg structure
Circuit optique integré avec une structure de Bragg

(30) Priorität: 17.09.1992 DE 4231113
(43) Veröffentlichungstag der Anmeldung: 30.03.1994
(73) Patentinhaber: ROBERT BOSCH GMBH, 70442 Stuttgart (DE)
(72) Erfinder: Mayer, Klaus-Michael, Dr., D-70839 Gerlingen (DE); Kragl, Hans, Dipl.-Ing., Dr., D-64372 Ober-Ramstadt (DE); Rech, Wolf-Henning, Dr., D-64347 Griesheim (DE); Strake, Engelbert, Dr., D-64372 Ober-Ramstadt (DE)

(56) Entgegenhaltungen:
- EP-A- 0 451 047
- WO-A-88/08548
- US-A- 4 636 031
- US-A- 4 923 271
- 'Integrated Photonics Research' A. NEYER et al.: 'New Fabrication Technology for Optical Waveguides' 1992, Conference Proceedings,
- PATENT ABSTRACTS OF JAPAN vol. 12, no. 354 (P-761)(3201) 22. September 1988 & JP-A-63 106 605 (HITACHI)

## Beschreibung

Die Erfindung betrifft eine integriert optische Schaltung mit einer Bragg-Struktur nach der Gattung des Hauptanspruchs und ein Verfahren zu deren Herstellung.

Derartige bekannte integriert optische Schaltungen sowie Verfahren zu deren Herstellung sind beispielsweise durch WO-A-88/08548 oder Neyer, A. und andere: "New Fabrication Technology for Polymer Optical Waveguides", Integrated Photonics Research, Conference Proceedings, Paper WBZ, 1992, Seiten 248-249) beschrieben. Dabei wird die Struktur im Spritzguß- bzw. Spritzprägeverfahren in die Trägerplatte aus einem Polymer eingeformt. Danach wird die Trägerplatte mit einem Kleber mit höherer Brechzahl versehen und ein Deckel derart aufgepreßt, daß der Kleber die für den Wellenleiter vorgesehene Nut ausfüllt.

Sowohl in der Trägerplatte als auch im Deckel befinden sich zum Anschluß von Glasfasern Faserführungsnuten, in welchen Glasfaserenden zur Zuführung bzw. Ableitung der optischen Signale gehalten werden. Durch diese Technik wird u.a. eine verlustarme Ankopplung der Faser an den integriert optischen Wellenleiter durch Anpassung der Wellenleiterparameter (Brechzahl für Mantel und Kern, Wellenleiterquerschnitt) in der polymeren integriert optischen Schaltung an die Wellenleiterparameter der Glasfaser ermöglicht.

Sollen in der integriert optischen Schaltung Bragg-Strukturen hergestellt werden, so ergibt sich für die Auslegung der Wellenleiter die Forderung nach einem hohen Koppelwirkungsgrad k zwischen vor- und rücklaufender Welle, was im einzelnen im Buch von Haus, H.: "Waves and Fields in Optoelectronics", Prentice-Hall, 1984, Seite 249 beschrieben ist. Bei einem hohen Koppelwirkungsgrad k haben die Bragg-Strukturen in Längsrichtung des Wellenleiters eine geringe Ausdehnung. Eine Optimierung der Wellenleiterparameter der integriert optischen Schaltung hinsichtlich eines möglichst hohen Koppelwirkungsgrades k ergibt Wellenleiter, deren Feldverteilung erheblich von der Feldverteilung der Glasfaser abweicht. Dadurch erhöhen sich die Koppelverluste bei einfacher Stoßkopplung zwischen Glasfaser und integriert optischem Wellenleiter.

Optimiert man jedoch die integriert optische Schaltung auf eine gute Feldanpassung an die Glasfaser, ergibt sich ein geringer Koppelwirkungsgrad k und beispielsweise für eine Bragg-Struktur mit etwa 90% Leistungsreflexionsfaktor eine Gesamtlänge in der Größenordnung von Zentimetern, was für den praktischen Einsatz zu lang ist, u.a. deshalb, da sich die geforderte konstante Bragg-Wellenlänge über eine Länge von Zentimetern nur schwierig herstellen läßt. Außerdem ist eine für die Funktion eines derartig langen Bragg-Reflektors notwendige niedrige Wellenleiterdämpfung ebenfalls nur schwer zu realisieren.

Aufgabe der Erfindung ist es, eine integriert optische Schaltung mit hohem Koppelwirkungsgrad k bei gleichzeitiger guter Feldanpassung an die Glasfaser vorzuschlagen, die ohne besondere technologische Schwierigkeiten herstellbar ist.

Die erfindungsgemäße integriert optische Schaltung mit den kennzeichnenden Merkmalen des Hauptanspruchs 1 hat den Vorteil, daß ein hoher Koppelwirkungsgrad k erzielt werden kann, ohne die Feldanpassung an das Feld der Glasfaser zu zerstören. Ein weiterer Vorteil der erfindungsgemäßen Schaltung besteht darin, daß eine Herstellung mit den beispielsweise von Neyer u.a. beschriebenen Technologien möglich ist. Das erfindungs gemäße Verfahren ist in Anspruch 10 definiert.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:
- Fig. 1: einen Querschnitt durch das Ausführungsbeispiel, wobei die erste und die zweite Trägerplatte noch nicht zusammengesetzt sind,
- Fig. 2: eine schematische Darstellung des Ausführungsbeispiels,
- Fig. 3 und Fig. 4: Darstellungen des zum Stand der Technik genannten Verfahrens.

Gleiche Teile sind in den Figuren mit gleichen Bezugszeichen versehen. In Anlehnung an bekannte integriert optische Schaltungen, bei denen eine weitere Platte lediglich als Deckel dient, werden im folgenden die Trägerplatte und die weitere Trägerplatte als Substrat und Deckel bezeichnet. Außerdem stellen die Figuren die Ausführungsbeispiele und die bekannten Schaltungen in einem vergrößerten Maßstab dar.

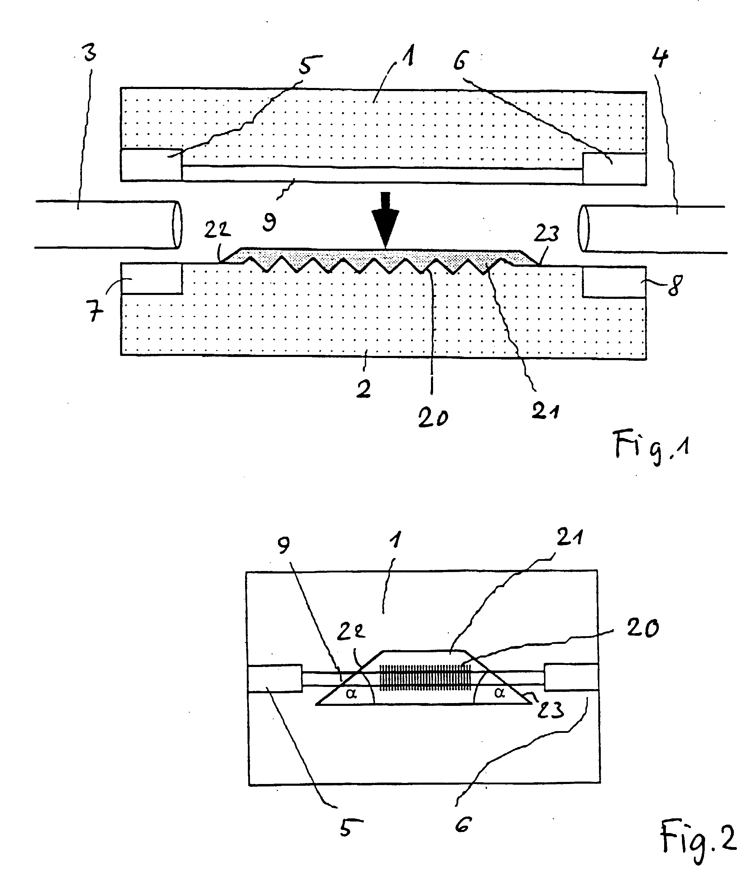

Ferner ist in den Figuren 1 und 2 die Bragg-Struktur wesentlich gröber und in Fig. 1 die Dicke der hochbrechenden Schicht übertrieben dargestellt.

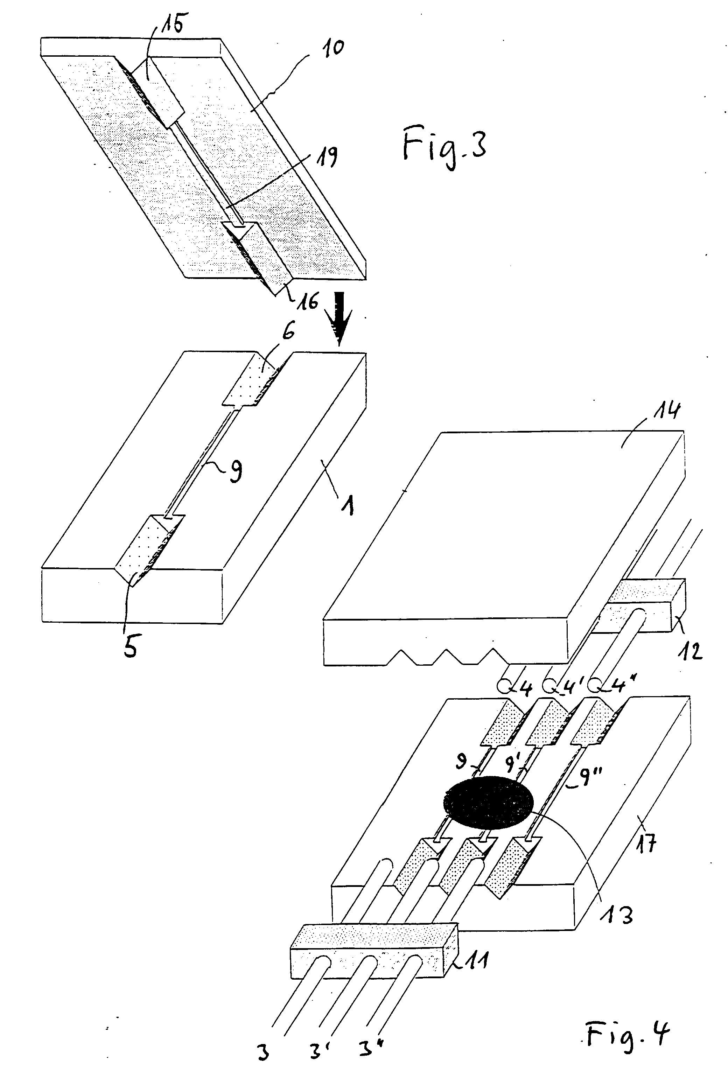

Das Ausführungsbeispiel nach Fig. 1 besteht aus einem Substrat 1 und einem Deckel 2, die vorzugsweise aus einem Polymer mit einem Brechungsindex bestehen, der demjenigen des Mantels der Glasfasern 3, 4 entspricht. Zur genauen Justierung der Glasfasern 3, 4 sind im Substrat 1 und im Deckel 2 Faserführungsnuten 5, 6, 7, 8 vorgesehen. Im Substrat 1 befindet sich eine Nut 9, welche die beiden Glasfasern 3, 4 miteinander verbindet. Diese Merkmale finden sich auch bei den bekannten integriert optischen Schaltungen, die vor einer weiteren Erläuterung der erfindungsgemäßen Schaltung im folgenden anhand der Figuren 3 und 4 beschrieben werden. Bei der perspektivischen Darstellung in Fig. 3 ist außer dem Substrat 1, den Faserführungsnuten 5, 6 und einer Nut 9 für den Wellenleiter ein Teil 10 einer Spritzgußform aus Metall dargestellt, welches die Negativa für die Faserführungsnuten 15, 16 und die Nut für den Wellenleiter 19 umfaßt, so daß beim Spritzguß die besagte Struktur entsteht.

In einem weiteren Verfahrensschritt wird auf das Substrat ein Kleber aufgebracht, der einen höheren Brechungsindex als das Substrat aufweist und sowohl als Wellenleiter in der Nut 9 als auch zur dauerhaften Verbindung des Substrats mit einem Deckel dient. Dieses ist in Fig. 4 anhand eines Substrats 17 mit drei Nuten 9, 9' und 9'' für Wellenleiter schematisch dargestellt. Die Glasfasern 3, 3', 3'' und 4, 4', 4'' werden zunächst von schematisch dargestellten vorläufigen Halterungen 11, 12 gehalten und in die Faserführungsnuten eingelegt.

Nach dem Aufbringen des Klebers 13 wird der Deckel 14 auf das Substrat 17 mit großer Andruckkraft aufgepreßt, so daß der Kleber in die Nuten 9, 9', 9'' eindringt und diese ausfüllt. Ferner dringt der Kleber 13 in die nicht von den Glasfasern eingenommenen Teile der Faserführungsnuten ein und fixiert somit die Glasfasern. Der restliche Kleber verteilt sich über die Oberfläche des Substrats 17. Durch entsprechenden Druck wird die Schichtstärke des Klebers möglichst gering gehalten. Nach Aushärten des Klebers ist der Deckel 14 fest mit dem Substrat 17 verbunden.

Bei der erfindungsgemäßen Schaltung ist der Deckel 2 (Figuren 1 und 2) mit einer Bragg-Struktur 20 versehen. Dieses kann mit einem geeigneten Abformverfahren erfolgen - beispielsweise durch Spritzguß in einer die Bragg-Struktur aufweisenden Form oder durch Prägen mit einem geeigneten Stempel. Auf die Bragg-Struktur 20 ist eine optische Schicht 21 aufgebracht, deren Brechungsindex über demjenigen des Klebers, also des Wellenleiters, liegt und die deshalb im folgenden als hochbrechende Schicht bezeichnet wird. Ein vorteilhafter Wert des Brechungsindex für die Schicht 21 ist 1,53 bei einem Brechungsindex von 1,48 des Substrats und 1,485 des Wellenleiters.

Ferner sollte die hochbrechende Schicht nur geringe optische Verluste haben und eine Dicke von etwa 0,1µm bis 1µm aufweisen. Bei der Wahl der Schichtdicke und des Brechungsindex der hochbrechenden Schicht ist darauf zu achten, daß der Wellenleiter im Monomodebereich betrieben wird. Dieses ist beispielsweise bei einer Schichtdicke von 0,1µm und einem Brechungsindex von 1,53 der Fall.

Die hochbrechende Schicht 21 erhöht die Wirkung der Bragg-Struktur 20. Dabei sind alle mit Bragg-Strukturen versehenen Flächen mit der hochbrechenden Schicht bedeckt. Zur Vermeidung einer abrupten Stoßstelle im Wellenleiter der integriert optischen Schaltung ist es vorteilhaft, wenn der Wellenleiter vom Faseranschluß her kommend, kontinuierlich in den mit der dünnen hochbrechenden Schicht bedeckten Wellenleiterteil übergeht. Der kontinuierliche Übergang kann durch geeignete Formgebung der hochbrechenden Schicht dadurch erzielt werden, daß die Ränder 22, 23 der hochbrechenden Schicht 21 in Richtung auf die Faserführungsnuten 7, 8 derart verlaufen, daß sie mit dem Wellenleiter einen spitzen Winkel α bilden. Außerdem kann vorgesehen sein, daß die Dicke der hochbrechenden Schicht von den Rändern 22, 23 her allmählich ansteigt.

Bei dem in Fig. 1 dargestellten Ausführungsbeispiel ist die Oberfläche der hochbrechenden Schicht 21 plan, so daß die Dicke der hochbrechenden Schicht 21 entsprechend der Bragg-Struktur wechselt. Dadurch entsteht eine Modulation des Brechungsindex, der auf die im Wellenleiter geführte Lichtwelle wirksam ist. Die Wirkung der Bragg-Struktur wird dadurch weiter erhöht. Eine solche Schicht kann in vorteilhafter Weise durch eine Sprüh-, Tauch- oder Schleuderbeschichtung aufgebracht werden.

Es ist im Rahmen der Erfindung jedoch auch möglich, eine gleichmäßig dicke Schicht auf die Bragg-Struktur 20 aufzubringen. Dieses kann beispielsweise durch Plasmaabscheidung, Sputterprozesse oder durch laserunterstützte Chemical Vapour Disposition (Laser-CVD) erfolgen.

Die Wahl dieser Verfahren bleibt dem Fachmann unter Berücksichtigung des jeweils für die hochbrechende Schicht 21 vorgesehenen Werkstoffs überlassen. Als Werkstoffe für die hochbrechende Schicht eignen sich anorganische Dielektrika, wie beispielsweise Al₂O₃, Si₃N₄, SiONH oder siliciumreiches Siliciumnitrid. Ferner kann die hochbrechende Schicht 21 von einem organischen Dielektrikum, insbesondere Polymer, oder einem anorganisch-organischen Polymer (Ormocer) gebildet werden. Diese Werkstoffe eignen sich insbesondere für die Aufbringung nach einem Beschichtungsverfahren im flüssigen Zustand.

Eine weitere Möglichkeit zur Bildung der hochbrechenden Schicht 21 besteht darin, den Brechungsindex des aus Polymer bestehenden Deckels durch UV-Bestrahlung, Ionendiffusions- oder -implantationsverfahren lokal anzuheben. Auch die Diffusion geeigneter Monomeren aus der Gasphase kann den Brechungsindex der polymeren Deckelplatte in der gewünschten Weise anheben. Dabei kann der Deckel selbst dieser Behandlung unterzogen werden oder ein dünner photopolymerisierbarer Film aufgebracht und anschließend durch geeignete Bestrahlung photopolymerisiert werden.

Es folgen noch einige Erläuterungen zu den bereits erwähnten Verfahren zur Herstellung der hochbrechenden Schicht:
1. Plasmaabscheidung (CVD) dünner Schichten, die beispielsweise als Si₃N₄-Schichten einen Brechungsindex n≈2 oder als nichtstöchiometrische SiOₓN_{y}H_{z}-Schichten von der relativen Zusammensetzung (x, y, z)-abhängige Brechungsindizes 1,46≤n≤2 aufweisen. Durch sogenannte siliciumreiche Siliciumnitridschichten (Herstellung mit Silan und Ammoniakgasen unter geeigneter CVD-Prozeßführung) können Brechungsindizes bis n≈2,6 eingestellt werden. Die Verfahren können durch Anpassung der Plasmaleistung bzw. Kühlung der Substrate so eingestellt werden, daß eine thermische Belastung unterhalb der Glasübergangstemperaturen der Polymerkunststoffe liegt und damit eine Schädigung der eingeprägten Bragg-Strukturen vermieden werden kann. Durch Beschichtungsverfahren in Maskentechnik können die Schichten lateral strukturiert aufgebracht werden (Taperherstellung).
2. Hochbrechende dielektrische Schichten wie beispielsweise Al₂O₃ (n=1,6) oder Siliciumnitridschichten können durch Sputterprozesse oder auch reaktives Sputtern auf Polymersubstrate aufgebracht werden.
3. Laserunterstützte Chemical Vapour Deposition (Laser-CVD) ermöglicht eine schonende lokale Deposition dünner, dielektrischer Schichten auf Polymersubstraten, indem Reaktionsgase wie beispielsweise Silan und Ammoniak über die Probe geführt werden und unter dem Einfluß energiereicher UV-Laserstrahlung lokal an den bestrahlten Probenorten deponiert werden. In diesem Verfahren ist eine ortsaufgelöste Deposition ohne aufwendige Maskentechnik möglich.
4. Der Brechungsindex einer Polymerdeckelplatte kann durch eine intensive UV-Bestrahlung, lokale Ionenimplantation oder ganzflächige Überschichtung mit einem polymeren Film, der photopolymerisierbare Oligomere (Photostarter) beinhaltet, und nachfolgende Photopolymerisation lokal angehoben werden. Dadurch ist eine einfache Taperherstellung möglich, wobei die erzielbaren Indexerhöhungen in der Regel gering sind im Vergleich zu den unter 1. bis 3. genannten Verfahren.
5. Sprühbeschichtung mit höherbrechenden Dielektrika, die sowohl anorganische Materialien als auch organische Polymere oder auch anorganisch-organische Polymere (sogenannte Ormocere) sein können. Durch automatisierte Sprühverfahren und Verwendung einer Schattenmaske in definiertem Abstand zur Substratoberfläche kann hierbei in besonders vorteilhafter Weise eine lokal begrenzte Fläche beschichtet werden, deren Schichtdicke zum Rand hin allmählich dünner wird (Sprühnebel) und damit ein Tapern der optischen Felder ermöglicht. Die Polymere können üblicherweise auch durch Tauchbeschichtung, durch sogenannte Langmuir-Blodgett Verfahren, oder auch durch Schleuderbeschichtung aufgebracht werden.
6. Durch kurzzeitiges Einwirken monomerer oder oligomerer Dämpfe können geeignete organische Stoffe in die Deckelplatte eindiffundiert und dort chemisch gebunden werden. Im Bereich der Diffusionstiefe kann so, abhängig von Materialwahl und eingebrachten Konzentrationen eine Brechungsindexerhöhung eingestellt werden.

## Patentansprüche

1. Integriert optische Schaltung mit einer Bragg-Struktur, wobei eine Trägerplatte (1) mit mindestens einem Wellenleiter und mit mindestens einem Anschluß (5, 7; 6, 8) für eine Glasfaser versehen ist, wobei die Bragg-Struktur (20) auf einer zum Wellenleiter gerichteten Oberfläche einer weiteren Trägerplatte (2) angeordnet ist und zwischen der Bragg-Struktur (20) und dem Wellenleiter eine Schicht (21) vorgesehen ist, deren Brechungsindex höher ist als der des Wellenleiters, dadurch gekennzeichnet, daß die Dicke der Schicht (21) und der Wellenleiter so bemessen sind, daß der Wellenleiter und die Schicht (21) eine einmodige Anordnung bilden.

2. Integriert optische Schaltung nach Anspruch 1, dadurch gekennzeichnet, daß die Schicht (21) auf der weiteren Trägerplatte (2) aufgebracht ist und die von der Bragg-Struktur (20) eingenommene Fläche mindestens abdeckt.

3. Integriert optische Schaltung nach Anspruch 2, dadurch gekennzeichnet, daß eine Begrenzung (22, 23) der Schicht (21) zwischen der Bragg-Struktur (20) und dem Anschluß (5, 7; 6, 8) in einem spitzen Winkel zum Wellenleiter verläuft.

4. Integriert optische Schaltung nach Anspruch 2, dadurch gekennzeichnet, daß die Dicke der Schicht (21) in ihrem Endbereich zwischen der Bragg-Struktur (20) und dem Anschluß (5, 7; 6, 8) allmählich abnimmt.

5. Integriert optische Schaltung nach Anspruch 1, dadurch gekennzeichnet, daß die dem Wellenleiter zugewandte Oberfläche der Schicht (21) mindestens im Bereich der Bragg-Struktur (20) eben ist.

6. Integriert optische Schaltung nach Anspruch 1, dadurch gekennzeichnet, daß die Schicht (21) einen Brechungsindex von etwa 1,53 aufweist.

7. Integriert optische Schaltung nach Anspruch 1, dadurch gekennzeichnet, daß die Schicht (21) aus einem anorganischen Dielektrikum wie Al₂O₃, Si₃N₄, SiONH oder siliciumreichem Siliciumnitrid besteht.

8. Integriert optische Schaltung nach Anspruch 1, dadurch gekennzeichnet, daß die Schicht (21) aus einem Polymer besteht.

9. Integriert optische Schaltung nach Anspruch 1, dadurch gekennzeichnet, daß die Trägerplatte (1) und die weitere Trägerplatte (2) aus einem Polymer bestehen.

10. Verfahren zur Herstellung einer integriert optischen Schaltung nach Anspruch 1, dadurch gekennzeichnet, daß eine Nut für den Wellenleiter und eine Faserführungsnut durch Abformung auf die Trägerplatte (1) erzeugt werden, daß eine Bragg-Struktur (20) durch Abformung auf eine weitere Trägerplatte (2) erzeugt wird, daß nach geeigneter Maskierung eine Schicht (21) mit höherem Bechungsindex als der das Wellenleiters aufgetragen wird, daß die weitere Trägerplatte (2) anschließend auf die Trägerplatte (1) aufgesetzt wird und daß die Trägerplatten mit einem Kleber verbunden werden, der ferner den Wellenleiter bildet, wobei die Dicke der Schicht (21) und der Wellenleiter so bemessen werden, daß der Wellenleiter und die Schicht (21) eine einmodige Anordnung bilden.

11. Verfahren nach Anspruch 10, dadurch gekennzeichnet, daß die Schicht in flüssiger Form durch Sprüh-, Tauch- oder Schleuderbeschichtung aufgebracht wird.

12. Verfahren nach Anspruch 10, dadurch gekennzeichnet, daß die Schicht mit erhöhtem Brechungsindex durch Eindiffusion und chemische Bindung geeigneter Stoffe, wie z. B. Dämpfe organischer Monomeren, im Bereich einer Diffusionslänge an der Oberfläche der weiteren Trägerplatte hergestellt wird.

## Claims

1. Integrated optical circuit having a Bragg structure, a support plate (1) being provided with at least one waveguide and with at least one connection (5, 7; 6, 8) for a glass fibre, the Bragg structure (20) being arranged on a surface, directed towards the waveguide, of a further support plate (2), and a layer (21) whose refractive index is higher than that of the waveguide being provided between the Bragg structure (20) and the waveguide, characterized in that the layer (21) thickness and the waveguide are dimensioned in such a way that the waveguide and the layer (21) form a single-mode arrangement.

2. Integrated optical circuit according to Claim 1, characterized in that the layer (21) is applied to the further support plate (2) and at least covers the surface taken up by the Bragg structure (20).

3. Integrated optical circuit according to Claim 2, characterized in that a boundary (22, 23) of the layer (21) extends, at an acute angle with respect to the waveguide, between the Bragg structure (20) and the connection (5, 7; 6, 8).

4. Integrated optical circuit according to Claim 2, characterized in that the layer (21) has a thickness which decreases gradually in its end region between the Bragg structure (20) and the connection (5, 7; 6, 8).

5. Integrated optical circuit according to Claim 1, characterized in that the layer (21) surface facing the waveguide is planar at least in the region of the Bragg structure (20).

6. Integrated optical circuit according to Claim 1, characterized in that the layer (21) has a refractive index of about 1.53.

7. Integrated optical circuit according to Claim 1, characterized in that the layer (21) consists of an inorganic dielectric such as Al₂O₃, Si₃N₄, SiONH or silicone-rich silicon nitride.

8. Integrated optical circuit according to Claim 1, characterized in that the layer (21) consists of a polymer.

9. Integrated optical circuit according to Claim 1, characterized in that the support plate (1) and the further support plate (2) consist of a polymer.

10. Process for producing an integrated optical circuit according to Claim 1, characterized in that a groove for the waveguide and a fibre-guide groove are produced by texturing onto the support plate (1), in that a Bragg structure (20) is produced by texturing onto a further support plate (2), in that, after suitable masking, a layer (21) having a refractive index higher than that of the waveguide is applied, in that the further support plate (2) is subsequently placed on the support plate (1), and in that the support plates are bonded to one another using an adhesive which furthermore forms the waveguide, the layer (21) thickness and the waveguide being dimensioned in such a way that the waveguide and the layer (21) form a single-mode arrangement.

11. Process according to Claim 10, characterized in that the layer is applied in liquid form by spray, dip or spin coating.

12. Process according to Claim 10, characterized in that the layer having a higher refractive index is produced by diffusing in and chemically binding suitable materials, for example vapours of organic monomers, in the region of a diffusion length at the surface of the further support plate.

## Revendications

1. Circuit optique intégré à structure de Bragg, avec une plaque de support (1) ayant au moins un guide d'ondes et au moins un branchement (5, 7 ; 6, 8) pour une fibre de verre, la structure de Bragg (20) étant prévue sur une surface dirigée vers le guide d'ondes d'une plaque de support (2) et entre la structure de Bragg (20) et le guide d'onde, il est prévu une couche (21) dont l'indice de réfraction est supérieur à celui du guide d'ondes,
caractérisé en ce que
l'épaisseur de la couche (21) et du guide d'ondes est dimensionnée pour que le guide d'ondes et la couche (21) forment un dispositif monomode.

2. Circuit optique intégré selon la revendication 1,
caractérisé en ce que
la couche (21) est appliquée sur l'autre plaque de support (2) et elle recouvre au moins la surface occupée par la structure de Bragg (20).

3. Circuit optique intégré selon la revendication 2,
caractérisé en ce qu'
une ligne (22, 23) de la couche (21) entre la structure de Bragg (20) et le branchement (5, 7 ; 6, 8) fait un angle aigu par rapport au guide d'ondes.

4. Circuit optique intégré selon la revendication 2,
caractérisé en ce que
l'épaisseur de la couche (21) dans sa zone d'extrémité entre la structure de Bragg (20) et le branchement (5, 7 ; 6, 8) diminue progressivement.

5. Circuit optique intégré selon la revendication 1,
caractérisé en ce que
la surface de la couche (21) tournée vers le guide d'ondes est plane au moins dans la zone de la structure de Bragg (20).

6. Circuit optique intégré selon la revendication 1,
caractérisé en ce que
la couche (21) présente un indice de réfraction d'environ 1,53.

7. Circuit optique intégré selon la revendication 1,
caractérisé en ce que
la couche (21) est un diélectrique anorganique tel que Al₂O₃, Si₃N₄, SiONH ou un nitrure de silicium enrichi de silicium.

8. Circuit optique intégré selon la revendication 1,
caractérisé en ce que
la couche (21) est un polymère.

9. Circuit optique intégré selon la revendication 1,
caractérisé en ce que
la plaque de support (1) et l'autre plaque de support (2) sont en un polymère.

10. Procédé de fabrication d'un circuit optique intégré selon la revendication 1,
caractérisé par
une rainure pour le guide d'ondes et une rainure de guidage de fibres obtenue par moulage d'une plaque de support (1), et en ce qu'une structure de Bragg (20) est formée par moulage sur une autre plaque de support (2),
et après un masquage approprié on obtient une couche (21) à indice de réfraction plus élevé que celui du guide d'onde, l'autre plaque de support (2) est alors appliquée sur la plaque de support (1), et
les plaques support sont reliées avec de la colle qui forme en outre le guide d'ondes,
l'épaisseur de la couche (21) et du guide d'ondes étant choisies pour que le guide d'ondes et la couche (21) forment un dispositif monomode.

11. Procédé selon la revendication 10,
caractérisé en ce que
la couche est appliquée à l'état liquide par pulvérisation, immersion ou revêtement par centrifugation.

12. Procédé selon la revendication 10,
caractérisé en ce que
la couche à fort indice de réfraction est réalisée par diffusion et combinaison chimique de matières appropriées (comme par exemple des vapeurs de monomères organiques) au niveau de la longueur de diffusion à la surface de l'autre plaque de support.
